Europäisches Patentamt

European Patent Office

Office européen des brevets

Publication number: **0 302 977**
**A1**

## EUROPEAN PATENT APPLICATION

21 Application number: **87307218.5**

22 Date of filing: **14.08.87**

51 Int. Cl.4: **G01N 21/51 , G01N 21/29**

43 Date of publication of application:
**15.02.89 Bulletin 89/07**

84 Designated Contracting States:
**DE FR GB**

71 Applicant: **Noguchi, Tokushige**
**No. 6-25-401, Yokodai 5-Chome Isogo-ku**
**Yokohama, Kanagawa-Prefecture(JP)**

72 Inventor: **Kohada, Takeo**
**No. 1-7, Nakahara 2-Chome Isogo-Ku**
**Yokohama Kanagawa-Prefecture(JP)**

74 Representative: **Lee, Philip Graham et al**
**MARKS & CLERK 57/60 Lincoln's Inn Fields**
**London WC2A 3LS(GB)**

54 **Device for detecting or viewing materials floating in fluids.**

57 A device for detecting or viewing dust particles or other materials floating in a gas such as air as well as in a liquid such as water comprising means (30, 31) for sealing the gas or liquid shaded from light in a viewing chamber (20), means (10, 13, 14, 15) for providing a beam of light in the gas or liquid in the viewing chamber (20), and an optical leans system (40) for magnifying the dust particles or matters floating and appearing in the beam of light.

FIG. 1

## "DEVICE FOR DETECTING OR VIEWING MATERIALS FLOATING IN FLUIDS"

This invention relates to a device for detecting or viewing floating materials in fluids. More particularly, it relates to a floating material viewing device for taking in a gas such as air or liquid such as water and liquid food (these gas and liquid will be hereinafter referred to as fluid) and enabling matters floating in the fluid to be viewed with eyes.

Interest in environmental health has intensified in recent years and more and more persons wish to purify their life environment. Various kinds of air washers and water purifiers are available for this purpose.

However, the extent to which air or water has been contaminated has hitherto only been measurable by means of expensive precision measurement devices. Therefore, the contamination of air or water was usually estimated by reference to in dust filters or smell of the air or water. Even when an air washer or water purifier was installed, the extent of cleaning could not be simply confirmed.

When materials floating in air or water are odourless, fine in size and small in density, they cannot be confirmed by smell. Further, they cannot be seen by eye. Life is continuing without paying any attention to such materials.

When measurement is made of life environments which are expected to be clean, a large amount of floating materials are found and it is clear that the presence of these floating materials is harmful to health.

Various kinds of devices are used in hospitals and in the field of precision industry to remove dust particles floating in the air so as to make rooms clean, but no simple means is provided for viewing the contamination of the air. When the device malfunctions, therefore, it is impossible easily to check the air by eye and when the contamination of the air is eventually confirmed, it may be too late.

As apparent from the above, it is advantageous to provide a simple device for enabling dust particles or other materials floating in air or water to be viewed by eye.

A floating material viewing device according to the present invention comprises a means for sealing a fluid shaded from light in a viewing chamber, a light source for providing a beam of light in the fluid in the viewing chamber, and an optical means for magnifying floating matters appearing in the beam of light to be viewed by eye.

An object of the present invention is therefore to provide a floating material viewing device capable of taking in a fluid and viewing materials floating in the fluid by eye.

The nature and merits of the present invention should become more apparent from the following detailed description with reference to the accompanying drawings, in which:-

Fig. 1 is a sectional view showing an embodiment of the present invention;

Fig. 2 is a sectional part fragmentary view of that embodiment;

Fig. 3 is a perspective view of the same embodiment;

Fig. 4 is a perspective view of another embodiment of the present invention; and

Fig. 5 is a perspective part fragmentary view of the second embodiment.

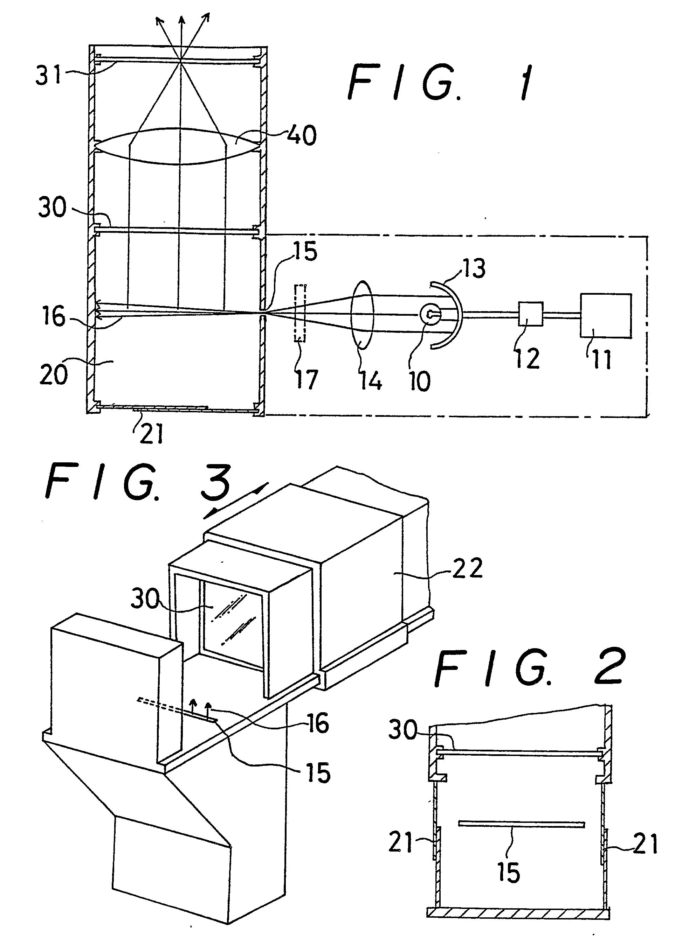

Referring now to the drawings, Fig. 1 shows an example of the floating materials viewing device according to the present invention, which is intended to view dust floating in the air which is a typical gas.

The viewing device comprises a light source 10, which is turned on and off by a switch 12, using a battery 11 as a power source. Light emitted from the light source 10 is focused by a mirror 13 and a lens 14 and introduced into a viewing chamber 20, after passing through a slit or pinhole 15, to provide a belt - or line-like light beam 16 in the viewing chamber 20.

At one end of the chamber 20 is a light shield 21 which is an electrically - or manually-operated shutter or cap. The mechanism of the lens shutter in the camera, light-shading plate or screen can be used as the light-shield. When no light-shield is provided the viewing chamger 20 is shielded from light by means of the hand, for example.

The belt - or line-like light beam in the viewing chamber 20 is formed as described above, but the present invention is not limited to the above-described embodiment. A plate having the slit and the pinhole 15, for example, may be prepared to use the slit and the pinhole alternately. The focusing mechanism in the camera may be used. The lens 14 may not be used. The belt - or line-like light beam in the viewing chamber 20 may be formed by directing the slit or pinhole 15 towards a bright light such as sunlight and illuminating light, without using the light source 10.

Even when the embodiment is as shown in Fig. 1, the light beam extending from the light source 10 may be changed using a prism, half-mirror or the like.

A single or plural colour filters 17 may be arranged in the path of the light beam extending from the light source 10 to colour the light beam 16. The colour of the light beam 16 may be optionally changed.

Preferably a pair of light-shield mechanisms 21 are arranged one to each side of the light beam 16 as shown in Fig. 2. When they are arranged like this, air to be viewed can be fully taken in the viewing chamber 20, keeping the light-shield mechanisms 21 opened, and the air which is thus uniform can be caught in the viewing chamber 20, closing the light-shield mechanisms 21.

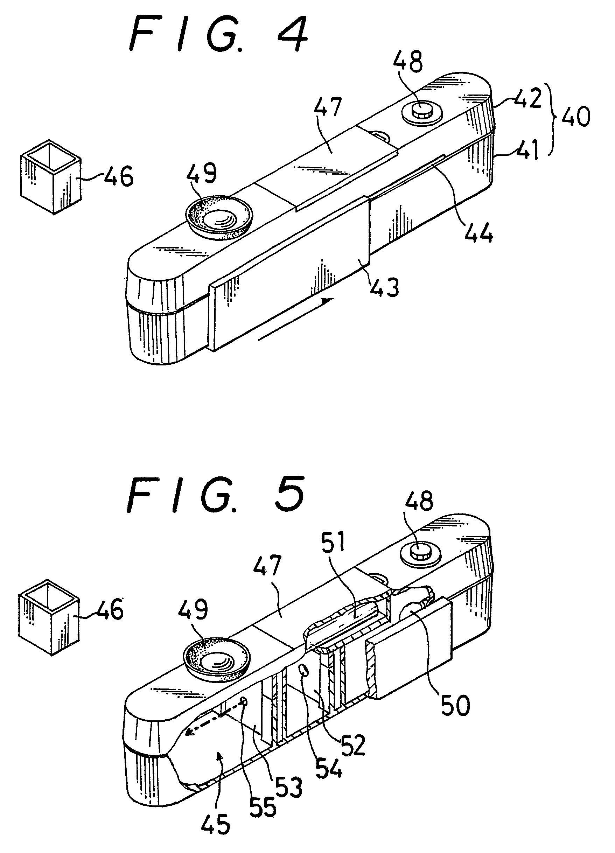

As shown in Fig. 3, the light-shield mechanisms 21 may be formed by a movable member 22 and the viewing chamber 20 may be opened and closed by sliding the movable member 22 in the directions shown by arrows.

Although not shown, the movable member 22 may be pivoted on sides of the frame body and swung round a pivot shaft to open and close the viewing chamber 20.

A bag-like cloth, may, for example, be used instead of the movable member 22.

In Fig. 1 there are transparent plates 30, 31 made of glass, synthetic resin or the like which serve to prevent floating dust taken into the viewing chamber 20 or dust floating in rhe air outside from entering an optical system which will be later described.

When the device is intended to receive a fluid such as water into the viewing chamber 20, as will be described later, the transparent plate 30 is attached in a water-tight manner to the frame body.

Also shown is a single magnifying lens or a group of the magnifying lenses 40, which serve as an optical means for magnifying dust particles floating in the light beam 16 to be viewed by eye. It is preferable that a camera is attached to a mount or directly to the optical system to take photographs. An "instant" camera made by Polaroid Corporation may be preferably used.

Air to be viewed is taken into the viewing chamber 20, by opening the light-shield mechanisms 21, and a certain amount of the air is caught in the viewing chamber 20, closing the light-shielding mechanisms 21. When the light source 10 is turned on, or the slit or pinhole 15 is directed to the light source, the belt - or line-like light beam 16 is projected in the viewing chamber 20. Dust particles floating in the air in the viewing chamber 20 thus appear in the light beam 16 and they are magnified by the optical system, thereby enabling them to be easily viewed with the eyes. When magnification is changed by the optical system or the colour of the light beam 16 is changed by the colour filters 17, their kind, size and state can be checked. When the instant camera is set, they can be recorded as images.

When a well-known sensor is arranged inside or outside the viewing chamber 20 to detect the density or kind of chemical components in the air and display it by digital - or analog-display, the chemical components being except those which compose the air, viewing with eyes becomes more interesting.

In the case of the device intended to view materials floating in a liquid such as water, a transparent plate is attached to the slit to make the viewing chamber 20 water-tight and water is admitted to the thus-formed viewing chamber 20.

Another embodiment of the present invention is hereafter described with reference to Figs. 4 and 5.

In Fig. 4 there is shown a frame 40 of a light-shield structure comprising an upper half 41 and a lower half 42. This frame structure includes those which are made by a single or three or more members.

A slide member 43 is movable along a guide groove 44 in a direction shown by an arrow and also in a direction reverse to the arrow to open and close a viewing chamber 45 shown in Fig. 5. When the slide member 43 is moved in the direction shown by the arrow, the viewing chamber 45 is opened to introduce a fluid therein to view materials floating in the fluid. When the slide member 43 is moved in the direction reverse to the arrow, the viewing chamber 45 is closed so as to be water-tight.

In a case where the fluid to be viewed is a gas, the gas can be introduced into the viewing chamber 45 only by moving the slide member 43 in two directions, but when the fluid is a liquid, a small transparent container 46 is used.

A battery housing section has a cap 47, a switch 48, for turning the light source on and off and an optical system 49.

The inside of the embodiment shown in Fig. 4 will be described by reference to Fig. 5.

A lamp 50 serves as the light source and is turned on and off by the switch 48, using a battery 51 as the power source. Light emitted from the lamp 50 passes through small holes 54 and 55 in shield plates 52 and 53 to form a light beam 56, as shown by a broken line, in the viewing chamber 45. This light beam 56 crosses the optical axis of the lens system 49. In other words, the focus of the lens exists in the light beam 56 extending from the light source.

## Claims

1. A device for detecting or viewing materials floating in a fluid comprising a means (30, 31) for sealing the fluid in a viewing chamber (20) and shielding (21) the fluid from light, a light source (10) for providing a beam of light in the fluid in the viewing chamber, and an optical lens system (13, 14) for magnifying the materials floating and appearing on the light beam.

2. A device according to claim 1 wherein the light beam in the viewing chamber is formed by means of small holes (15) in plural light-shielding plates (21) arranged in the light extending from the light source.

3. A device according to claim 1 or claim 2 wherein the focus of lenses in the optical lens system exists in the beam of light created by the light source.

4. A device according to any of claims 1, 2 and 3 wherein a liquid to be viewed is contained in a small transparent container and housed in the viewing chamber.

5. A device for detecting or viewing materials floating in a field substantially as hereinbefore described with reference to, and as shown in, Figs. 1 to 3 or Figs. 4 and 5 of the accompanying drawings.

FIG. 1

31

40

30

15

13

16

20

17   14   10   12   11

21

FIG. 3

30

22

16

15

FIG. 2

30

21   21

15

# F I G. 4

# F I G. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | AU-A-  4 932  (COMMONWEALTH OF AUSTRALIA) <br> * pages 2-5; figure * <br> --- | 1-5 . | G 01 N  21/51 <br> G 01 N  21/29 |
| Y | H.R. KRUYT "Colloid Science", vol. 1, 1952, pages 34-39, "Irreversible systems", Eysevier Publishing Co., Amsterdam, NL; <br> * pages 35, 39 * <br> --- | 1-5 | |
| X | GB-A-1 024 734  (B.P.) <br> * claim 1 * <br> --- | 5 | |
| A | US-A-1 807 659  (GRANT) <br> * claim 2 * <br> --- | 1,5 | |
| A | US-A-1 516 608  (KIDDE et al.) <br> * page 1 * <br> --- | 1,5 | |
| A | DE-U-1 969 803  (PYROTECTOR GMBH) <br> * claim 1 * <br> ----- | 1,5 | |

TECHNICAL FIELDS
SEARCHED (Int. Cl.4)

G 01 N  15/00
G 01 N  21/00

The present search report has been drawn up for all claims

| Place of search | Date of completion of the search | Examiner |
|---|---|---|
| BERLIN | 12-04-1988 | BRISON O.P. |